# EUROPEAN PATENT SPECIFICATION

(11) **EP 0 473 643 B1**
(45) Date of publication and mention of the grant of the patent: **14.12.1994**
(21) Application number: 90907666.3
(22) Date of filing: 27.03.1990
(51) Int. Cl.: C09D 4/00

(54) **PHOTOCURABLE PIGMENTED SECONDARY OPTICAL FIBER COATINGS**
LICHTHÄRTENDE PIGMENTIERTE SEKUNDÄR-OPTISCHE FASERBESCHICHTUNGEN
COUCHES DE FIBRE OPTIQUES SECONDAIRES COLOREES ET PHOTODURCISSABLES

(30) Priority: 12.05.1989 US 350768
(43) Date of publication of application: 11.03.1992
(73) Proprietor: DSM N.V., 6411 TE Heerlen (NL)
(72) Inventor: MURRAY, Kevin, P., Hoffman Estates, IL 60195 (US); BISHOP, Timothy, E., Algonquin, IL 60102 (US)
(86) International application number: US9001628
(87) International publication number: WO9013579

(56) References cited:
- GB-A- 2 163 755
- US-A- 4 153 778
- US-A- 4 427 823
- US-A- 4 447 520

## Description

### Technical Field

This invention relates to photocurable pigmented coatings which are adapted to be used as secondary coatings for optical fiber.

### Background Art

Photocurable coatings for optical glass fiber are well known and generally comprise a polyethylenically unsaturated oligomer in a liquid ethylenically unsaturated medium containing a photoinitiator rendering the composition curable by exposure to light of appropriate wavelength. These photocurable coatings are selected because they cure with great rapidity, allowing the rapid production of the coated optical fiber. Rapid cure is essential because the coatings are applied to the freshly formed glass fiber so that the speed at which the fiber is drawn is limited by the speed at which the drawn fiber can be coated and cured.

Optical fiber is frequently coated with two superposed photocured coatings. The coating which contacts the glass is a soft primary coating providing resistance to low temperature microbending. The outer exposed coating is a much harder secondary coating providing desired resistance to handling forces, such as those encountered when the fiber is cabled.

It is frequently desired to color the secondary coating to facilitate the selection of the optical fiber which is desired from among many in a cable. The use of a photocurable ink or a colored solvent-borne lacquer to color or overcoat the optical fiber which has already been prime coated and secondary coated is known. These expedients introduce the need for a third coating operation which is undesirable because it reduces the space, and hence the curing time, for curing the two coatings which are essential.

It is therefore desirable to include sufficient pigment for desired coloration directly into the secondary coating, but this has created difficulty.
More particularly, the inclusion of pigments in the secondary coating introduces difficulty because the presence of pigment slows the photoinitiated cure. Also, the presence of pigment particles lowers the fiber strength by creating abrasive forces when the coated fiber is handled. Another difficulty is the observed increase in the attenuation of light signals at low temperature as a result of microbending when the coating is pigmented with conventional pigments which contain particles larger than 5 microns. All of these difficulties are known and have effectively discouraged the pigmentation of photocurable secondary coatings for optical glass fiber.

These problems are resolved, in accordance with this invention, by a liquid pigmented (meth)acrylate-functional photocurable coating composition adapted for the secondary coating of optical glass fiber, said composition comprising an acrylate-functional polyurethane or epoxy resin having a molecular weight of from 400 to about 10,000 dalton and a reactive diluent, said composition having a pigment content, the particles of this pigment having a size of less than about 1 micron, said composition having a viscosity in the range of 2000 to 20,000 centipoises (m Pa.s) and an acyl phosphine oxide photoinitiator.

The liquid photocurable secondary coating is thus pigmented to provide a pigment content of the character noted above. The pigment content is sufficient to provide a coloration which can be distinguished from other colors and in the absence of a significant excess of said pigment. The proportion of pigment which is appropriate is broadly from 0.2% to 20% by weight of the total composition, albeit sufficient pigment is normally far loss than 20%. Excess pigment beyond that needed for easy color selection is generally avoided.

The needed pigment concentration will vary considerably with the pigment which is selected. For titanium dioxide white pigment, we usually use from 3% to 8%, while for colored (non-white) pigments about 0.25% to about 2% is generally appropriate. Dyes cannot be used in place of pigments because dyes tend to fade with time.

In this invention it is essential to grind the pigment until pigment particles having a size of 1 micron or greater have been removed. The removal of the oversize particles is carried out until one can no longer detect the presence of particles in excess of 1 micron. In this way the particles of the pigment have a size of loss than about 1 micron.

The larger particles lower the strength of the photocured coatings, so they must be removed to insure that oversized particles will not damage the optical fiber system, as previously described.

It is desired to stress that pigment particles interfere with the desired rapid cure, and reduced pigment size aggravates this problem. This is because an effective cure in part depends upon the extent to which light is scattered by the pigment, as will be explained.

The coatings needed to protect optical glass fiber are of the order of 3 mils in thickness. This requires that the light used for cure penetrate a considerable distance into the coating before it reaches the bottom of that coating, and when light is scattered by pigment particles it can prevent the needed penetration. Light scattering is generally increased as the particle size is decreased because smaller particles provide a greater surface area. As a result, the decreased particle size needed to minimize the previously discussed difficulties makes it more difficult for the light used for photocuring to reach the bottom of the applied coating.

It is desired to note that the thickness under consideration is much greater than that used in inks where very thin coatings are applied. These inks contain a high level of pigmentation so the situation in inks is not the same as that encountered in the thick coatings of low pigmentation level needed for optical fiber coating.

Light absorption is also important to the achievement of a rapid photocure, but absorption is not as closely related to pigment particle size as is light scattering.

As should now be evident, the presence of a significant proportion of pigment impairs the cure of the ethylenically unsaturated photocurable liquid composition which is applied to the fiber and causes mechanical difficulties. In this invention it has been found that the mechanical difficulties are overcome when pigment particles having a size in excess of 1 micron are removed, and the cure speed is maintained when the proportion of pigment is minimized, as noted previously, and when the composition which is photocured contains a photoinitiator which is an acyl phosphine oxide.

These phosphine oxides enable the pigmented composition to cure rapidly on exposure to light to provide a strong secondary coating having an easily visible coloration. It is stressed that the presence of significant pigment is known to decrease the cure speed, and the additional grinding of the pigment to remove particles of excessive size would be expected to further decrease the cure speed. However, a rapid cure is obtained in the presence of the acyl phosphine oxide photoinitiator despite the pigmentation and reduced particle size.

It is known that acyl phosphine oxides can be used in heavily pigmented inks to speed the photocure, but such inks are employed in very thin layers where there is no problem of light penetration to a relatively great depth and where the presence of a few large pigment particles is not significant.

In the preferred practice of this invention, the cure is further speeded by the presence of an amine in an amount of from 0.1% to 5%, preferably from 0.2 to 1.0%. While any amine can be used, an illustrative preferred amine is triethanolamine. This amine is selected because it is a tertiary amine which avoids reaction with acrylate unsaturation, and because it is nontoxic.

Ordinary photoinitiators are aryl ketones, such as benzophenone, but these do not function very well in the presence of the pigment. In our experience, one of the best aryl ketone photoinitiators for the compositions which will later be illustrated is isopropylthioxanthone, which is chemically similar to benzophenone. This photoinitiator is used in combination with an amine photosensitizer to speed the cure. However, this conbination is not very satisfactory because the coatings yellow during the cure. Also, the cure is slow and in some instances, full mechanical properties do not develop regardless of the duration of the light exposure.

In contrast, the acyl phosphine oxide photoinitiators used in this invention provide a rapid and full cure without discoloration. The aryl ketones do not provide a comparable result even when used with the same pigmented composition.

### Detailed Disclosure of the Invention

In accordance with this invention, the photocurable composition which is selected can be any (meth)acrylate-functional liquid which is adapted for use in the secondary coating of optical glass fiber. These are preferably acrylate-functional systems in which an acrylate-functional resinous material is dissolved in one or more rapidly polymerizable ethylenically unsaturated liquids. These liquids reduce the viscosity of the composition to a level appropriate for coating application.

The viscosities which are normally used for the coating of optical glass fiber are in the range of 4,000 to 15,000 centipoises measured at room temperature (25 degrees C). Coating is usually carried out within 15 degrees C of room temperature. When the composition is heated to aid application, the room temperature viscosity can be as high as about 20,000 centipoises. When the composition is cooled to aid application, the room temperature viscosity can be as low as about 2,000 centipoises.

Useful acrylate-functional materials are preferably combinations of acrylate-functional resins, especially acrylate-functional polyurethane resins or acrylate-functional epoxy resins. These can be used alone or in combination with one another. Suitable resins are well known and have a number average molecular weight of from about 400 to about 10,000 daltons. These are usually too viscous to be used in the absence of some reactive diluent. Suitable resins are well known and are further illustrated in the Examples.

The liquid reactive diluents which can be used to lower the viscosity of the resins to enable coating application are rapidly reactive ethylenically unsaturated materials. Acrylate-functional liquids are suitable, such as ethyl acrylate, but it is preferred to use polyacrylates having a number average molecular weight of up to about 500 for this purpose. These are illustrated by trimethylol propane triacrylate. When the liquid is monoethylenically unsaturated, vinyl lactams are preferred, such as N-vinyl pyrrolidone and N-vinyl caprolactam.

While acrylate-functional materials are described above, the corresponding methacrylate-functional materials are also suitable, albeit they cure more slowly.

The specific character of the pigment is of secondary significance. Illustrate pigments which can be used in this invention are azo yellows, perylene reds, and phthalocyanine greens and blues. As a result, it will be understood that pigment selection is not itself important in this invention.

The pigment which has caused us the greatest difficult in this invention is titanium dioxide, and even that pigment can be used herein when it is adequately ground, and especially when it is used in minimum amount.

The amines are preferably tertiary amines. Amines are generally odorous and toxic, but alkanol amines minimize this difficulty. Accordingly, triethanol amine, dimethyl ethanol amine, monomethyl diethanol amine and the corresponding alkanol amines in which the methyl group is replaced by the ethyl, propyl or butyl group are preferred. Methanol amines and propanol amines can be used in place of ethanol amines.

All proportions herein are by weight, unless otherwise stated, and molecular weights, as is conventional, are reported in daltons. The term "dalton", as used herein in its various grammatical forms, defines a unit of mass that is 1/12th the mass of carbon-12.

As will be understood, cure by exposure to ultraviolet light, including visible light near the ultraviolet range, is intended. In present practice, the light used is usually in the ultraviolet range which extends from about 200 nanometers to about 400 nanometers. However, light of longer wavelength may be used up to about 600 nanometers, preferably up to about 520 nanometers.

The acyl phosphine oxides are themselves known photoinitiators, albeit of unusual type. More particularly, these oxides can be described as benzoyl diaryl phosphine oxides which can be substituted with hydrocarbon and/or halogen substituents. The preferred hydrocarbon substituents are alkyl groups containing up to 10 carbon atoms. The preferred halogen substituents are chlorine and bromine which can be present so long as they do not unduly reduce the solubility. The particularly preferred acyl phosphine oxides are represented by the following formula. 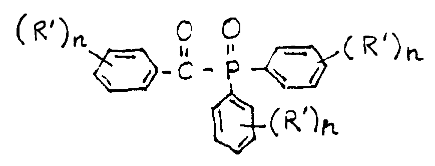
in the above formula, R' is an optional hydrocarbon substituent independently selected to contain from 1 to 10 carbon atoms, which may be alkyl or aryl, preferably an alkyl group containing from 1 to 4 carbon atoms, and n is an integer which is independently selected to be from 0 to 3.

In preferred practice, a 2,4,6-trimethyl benzoyl compound is used, as in the compound compound 2,4,6-trimethyl benzoyl diphenyl phosphine oxide. This compound is available from BASF under the trade designation Lucirin.

Further examples of the acyl phosphine oxides are benzoyl dimethoxy phosphine oxide, and 2,methylbenzoyl diphenyl phosphine oxide.

The acyl phosphine oxide photoinitiators are normally present in an amount of from about 0.5% to about 10%, preferably from 2% to 6%.

The invention is illustrated in the Examples which follow in which all parts and proportions are by weight.

### Example 1 (a most difficult case because of the large proportion of pigment)

| Component | Percent |
|---|---|
| Polyether urethane acrylate | 49.1 |
| Epoxy acrylate | 8.6 |
| Trimethylol propane triacrylate | 7.1 |
| N-vinyl pyrrolidone | 3.9 |
| N-vinyl caprolactam | 7.9 |
| Phenothiazine (stabilizer) | 0.01 |
| 2,4,6-trimethylbenzoyldiphenyl phosphine oxide | 2.4 |
| Silicone oil (DC 193 from Dow Corning) [flow control agent] | 0.2 |
| 2-hydroxyethyl acrylate | 0.8 |
| Titanium dioxide, rutile | 20.0 |

In the above tabulation, the polyether urethane acrylate was the reaction product of a stoichiometric proportion of 2-hydroxyethyl acrylate with an isocyanate-terminated oligomer which is the urethane reaction product of polyoxytetramethylene glycol of molecular weight 650 with toluene diisocyanate,the product having an NCO content of 7.5% by weight. The isocyanate-terminated product used had a viscosity at 86 degrees F (30 degrees C) of 8000 centipoises.

The epoxy acrylate was the diacrylate of Epon 828 (Shell) which is a diglycidyl ether of bisphenol A having a molecular weight of 390.

The above mixture was sandmilled to a particle size finer than represented by a 7.5 North Standard grind gauge rating and checked by light microscopy to make sure that no particles having a size greater than 1 micron (1 micrometer) are present.

A 3 mil (0.076 mm) film of the above composition on a glass plate was passed beneath a single Fusion Systems "D" lamp at 27 feet per minute (9m/minute) provided a film which was tack-free and non-yellowed after 1 pass. After 4 passes, full mechanical properties had been developed. The "D" lamp emits radiation in the wavelength range of 200 to 470 nanometers (300 Watts per linear inch: 12 W/mm), the peak radiation being at 380 nanometers.

A composition corresponding to that described above was provided in which the 2.4% phosphine oxide was replaced by the most favorable conventional photoinitiator system known to us for curing the type of composition under consideration (based on testing more than 20 different photoinitiators and variations thereof). This composition contained 0.5% of isopropylthioxanthone and 2.5% triethanol amine. This modified composition achieved surface cure with 1 pass beneath the lamp at the speed set forth above. However, the film so produced was yellow (which faded but did not disappear after 24 hours). Also, full development of the mechanical properties which this system should provide was never obtained even after 10 passes. This is because the modulus increased with each exposure, with no end in sight.

### Example 2

| Component | Percent |
|---|---|
| Polycaprolactone urethane acrylate | 41.4 |
| Phenoxy acrylate | 45.1 |
| Trimethylol propane triacrylate | 5.0 |
| 2,4,6-trimethylbenzoyldiphenyl phosphine oxide | 3.0 |
| Silicone oil (DC 203) | 0.01 |
| Titanium dioxide, rutile | 5.0 |
| Triethanol amine | 0.5 |

The above mixture was sandmilled to a particle size finer than represented by a 7.5 North Standard grind gauge rating and checked by light microscopy to make sure that no particles having a size greater than 1 micron was present.

A 3 mil (0.076 mm) film of the above composition on a glass plate passed beneath a single Fusion "D" lamp at 27 feet per minute (9m/minute) reaches full mechanical property development without discoloration. A corresponding conventional system utilizing isopropylthioxanthone required the line to be slowed to 12 feet per minute (4m/minute) for full cure, and then it badly yellowed.

When both of the two compositions described above were cured with an ultraviolet lamp having a strong visible component, as for example, a Fusion Systems "V" bulb, a further difference in cure speed was noticed. Thus, the acyl phosphine oxide cured at 100 feet per minute in air using a single "V" lamp. But the isopropylthioxanthone containing system required 15 feet per minute (5m/minute) exposure for full cure and still remained yellow in appearance. The "V" lamp emits about the same radiation as the "D" lamp, except the peak radiation is shifted to 420 nanometers.

Typical faster-curing compositions in accordance with this invention, such as that illustrated in Example 2, will cure fully when exposed to a single Fusion Systems "D" lamp at a speed of about 55 feet per minute.

## Claims

1. A liquid pigmented (meth)acrylate-functional photocurable coating composition adapted for use in the secondary coating of optical glass fiber, said composition comprising an acrylate-functional polyurethane or epoxy resin having a molecular weight of from about 400 to about 10,000 daltons and a reactive diluent having a pigment content; the particles of said pigment having a size of less than about 1 micron, said composition having a viscosity in the range of 2,000 to 20,000 centipoise (m Pa.s) and an acyl phosphine oxide photoinitiator.

2. Composition as recited in claim 1 in which said photocurable composition contains said pigment in an amount of from 0.2% to 20% by weight of the composition.

3. Composition as recited in claims 1 or 2 in which said photocurable composition is acrylate-functional and has a room temperature viscosity in the range of about 4000 to about 15000 centipoises.

4. Composition as recited in any one of claims 1-3 in which said photocurable composition further includes an amine in a proportion of from 0.1% to 5% of the weight of the composition.

5. Composition as recited in claim 4 in which said amine in a tertiary amine present in a proportion of from 0.2% to 1%.

6. Composition as recited in claim 5 in which said tertiary amine is an alkanol amine.

7. Composition as recited in claim 6 in which said alkanol amine is triethanol amine.

8. Composition as recited in any one of claims 1-7 in which said acyl phosphine oxide is a benzoyl diaryl phosphine oxide that is present in an amount of from about 0.5% to about 10%.

9. Composition as recited in claim 8 in which said benzoyl diaryl phosphine oxide has the formula: 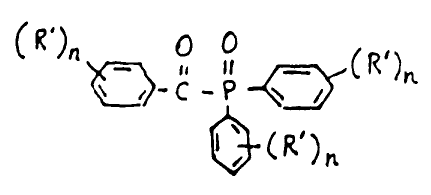 in which R' is an optional hydrocarbon substituent independently selected to contain from 1 to 10 carbon atoms and n is an independently selected integer from 0 to 3.

10. Composition as recited in claim 8 or 9 in which said phosphine oxide is present in an amount of from 2% to 6%.

11. Composition as recited in anyone of claim 8-10 in which said phosphine oxide is a 2,4,6-trimethyl benzoyl compound.

12. Composition as recited in claim 11 in which said phosphine oxide is the compound 2,4,6-trimethyl benzoyl diphenyl phosphine oxide.

13. Composition according to any one of claims 1-12, said composition being pigmented white with titanium dioxide in an amount of from about 3% to about 8% by weight of the composition.

## Patentansprüche

1. Flüssige pigmentierte (Meth)-acrylat-funktionelle, lichtaushärtbare Beschichtungszusammensetzung, geeignet zur Verwendung in der sekundären Beschichtung einer optischen Glasfaser, welche Zusammensetzung ein Acrylat-funktionelles Polyurethan- oder Epoxyharz mit einer Molmasse von etwa 400 bis etwa 100 000 Dalton und ein reaktives Verdünnungsmittel mit einem Pigmentgehalt, wobei die Teilchen des Pigments eine Größe von weniger als etwa 1 µm aufweisen, und wobei die Zusammensetzung eine Viskosität im Bereich von 2000 bis 20 000 Centipoise (mPas) aufweist, und einen Acylphosphinoxid-Lichtinitator umfaßt.

2. Zusammensetzung nach Anspruch 1, wobei die lichtaushärtbare Zusammensetzung das Pigment in einer Menge von 0,2 Masse-% bis 20 Masse-% der Zusammensetzung enthält.

3. Zusammensetzung nach Anspruch 1 oder 2, wobei die lichtaushärtbare Zusammensetzung Acrylat-funktionell ist und eine Raumtemperatur-Viskosität im Bereich von etwa 4000 bis etwa 15 000 Centipoise aufweist.

4. Zusammensetzung nach einem der Ansprüche 1 bis 3, wobei die lichtaushärtbare Zusammensetzung ferner ein Amin in einer Menge von 0,1 Masse-% bis 5 Masse-% der Zusammensetzung enthält.

5. Zusammensetzung nach Anspruch 4, worin das Amin ein tertiäres Amin, das in einer Menge von 0,2 % bis 1 % vorliegt, ist.

6. Zusammensetzung nach Anspruch 5, worin das tertiäre Amin ein Alkanolamin ist.

7. Zusammensetzung nach Anspruch 6, worin das Alkanol Triethanolamin ist.

8. Zusammensetzung nach einem der Ansprüche 1 bis 7, worin das Acylphosphinoxid ein Benzoyldiarylphosphinoxid, das in einer Menge von etwa 0,5 % bis etwa 10 % vorliegt, ist.

9. Zusammensetzung nach Anspruch 8, worin das Benzoyldiarylphosphinoxid die Formel
aufweist, worin R' einen gegebenenfalls vorliegenden Kohlenwasserstoff-Substituent, der unabhängig ausgewählt ist, um 1 bis 10 Kohlenstoffatome zu enthalten, bedeutet, und n eine unabhängig ausgewählte ganze Zahl von Null bis 3 ist.

10. Zusammensetzung nach Anspruch 8 oder 9, worin das Phosphinoxid in einer Menge von 2 % bis 6 % vorliegt.

11. Zusammensetzung nach einem der Ansprüche 8 bis 10, worin das Phosphinoxid eine 2,4,6-Trimethylbenzoyl-Verbindung ist.

12. Zusammensetzung nach Anspruch 11, worin das Phosphinoxid die Verbindung 2,4,6-Trimethylbenzoyldiphenylphosphinoxid ist.

13. Zusammensetzung nach einem der Ansprüche 1 bis 12, wobei die Zusammensetzung mit Titandioxid in einer Menge von etwa 3 Masse-% bis etwa 8 Masse-% der Zusammensetzung weiß pigmentiert ist.

## Revendications

1. Composition de couche photodurcissable à fonction (méth)acrylate pigmentée liquide adaptée pour utilisation dans le revêtement secondaire des fibres de verre optique, ladite composition comprenant une résine polyuréthane ou époxyde à fonction acrylate ayant un poids moléculaire d'environ 400 à environ 1 10 000 daltons et un diluant réactif contenant un pigment; les particules dudit pigment ayant une taille inférieure à environ 1 micron, ladite composition ayant une viscosité comprise entre 2000 et 20 000 centipoises (mPa.s) et un photoinducteur oxyde d'acylphosphine.

2. Composition selon la revendication 1 dans laquelle ladite composition photodurcissable contient ledit pigment en une quantité de 0,2% à 20% en poids de la composition.

3. Composition selon les revendications 1 ou 2 dans laquelle ladite composition photodurcissable est à fonction acrylate et a une viscosité à la température ambiante comprise entre environ 4000 et environ 15000 centipoises.

4. Composition selon l'une quelconque des revendications 1-3 dans laquelle ladite composition photodurcissable inclut en outre une amine en une proportion allant de 0,1% à 5% du poids de la composition.

5. Composition selon la revendication 4 dans laquelle ladite amine dans une amine tertiaire est présente en une proportion allant de 0,2% à 1%.

6. Composition selon la revendication 5 dans laquelle ladite amine tertiaire est une alcanol-amine.

7. Composition selon la revendication 6 dans laquelle ladite alcanol-amine est la triéthanol-amine.

8. Composition selon l'une quelconque des revendications 1-7 dans laquelle ledit oxyde d'acyl-phosphine est un oxyde de benzoyl-diaryl-phosphine qui est présent en une quantité allant d'environ 0,5% à environ 10%.

9. Composition selon la revendication 8 dans laquelle ledit oxyde de benzoyl diaryl-phosphine a la formule 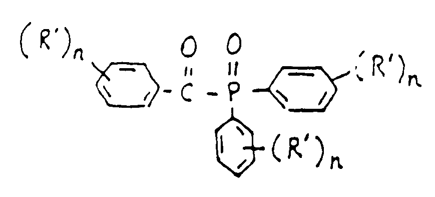 dans laquelle R' est un substituant hydrocarboné facultatif indépendamment choisi pour contenir de 1 à 10 atomes de carbone et n est un nombre entier indépendamment choisi entre 0 et 3.

10. Composition selon la revendication 8 ou 9 dans laquelle ledit oxyde de phosphine est présent en une quantité de 2% à 6%.

11. Composition selon l'une quelconque des revendications 8-10 dans laquelle ledit oxyde de phosphine est un composé de 2,4,6-triméthyl-benzoyle.

12. Composition selon la revendication 11 dans laquelle ledit oxyde de phosphine est le composé oxyde de 2,4,6-triméthyl-benzoyl-diphényl-phosphine.

13. Composition selon l'une quelconque des revendications 1-12, ladite composition étant pigmentée en blanc avec du dioxyde de titane en une quantité d'environ 3% à environ 8% en poids de la composition.
